Europäisches Patentamt

European Patent Office

Office européen des brevets

(11) Veröffentlichungsnummer: **0 416 164 A1**

## (12) EUROPÄISCHE PATENTANMELDUNG

(21) Anmeldenummer: 89116663.9

(22) Anmeldetag: 08.09.89

(51) Int. Cl.5: **H01G 1/11**

(43) Veröffentlichungstag der Anmeldung:
**13.03.91 Patentblatt 91/11**

(84) Benannte Vertragsstaaten:
**AT BE CH DE ES FR GB GR IT LI LU NL SE**

(71) Anmelder: **Siemens Aktiengesellschaft**
**Wittelsbacherplatz 2**
**W-8000 München 2(DE)**

(72) Erfinder: **Krös, Rudolf**
**Walkürenweg 24**
**W-7920 Heidenheim(DE)**
Erfinder: **Vetter, Harald**
**Weinberg 7**
**W-8400 Regensburg(DE)**

(54) **Elektrischer Kondensator.**

(57) Ein elektrischer Kondensator besteht aus zumindest einem Kondensatorwickel (5), der auf einem metallischen Kernrohr (1) angeordnet ist. Das Kernrohr ist gegenüber dem übrigen Kondensator gas- und flüssigkeitsdicht abgedichtet. Im Inneren des Kernrohrs (1) befindet sich ein komprimierbares Gas (13), so daß über den beweglichen Kolben (3) Volumenänderungen des Kondensators und eines flüssigen Imprägniermediums an das komprimierbare Gas (13) weitergegeben werden.

**FIG 3**

## ELEKTRISCHER KONDENSATOR

Die Erfindung betrifft einen elektrischen Kondensator, der mit einer dielektrischen Flüssigkeit imprägniert ist, der aus zumindest einem auf einem Kernrohr angeordneten Kondensatorwickel besteht und der gas- und flüssigkeitsdicht in einem Gehäuse eingebaut ist, das mit der dielektrischen Flüssigkeit bis auf ein Puffervolumen gefüllt ist.

Der aktive Teil von Leistungskondensatoren besteht häufig aus runden Wickeln. Diese Wickel werden verschaltet und über Formteile (z.B. Kappen) distanziert. Die Formteile sind mit Spiel in das zugehörige Gehäuse (Rohr, Becher, usw.) eingesetzt und fixieren gleichzeitig die Wickel. Nach Abschluß der Montagearbeiten wird der Kondensator im Vakuum getrocknet und anschließend imprägniert. Der Endverschluß des Gehäuses erfolgt, nachdem das Puffervolumen eingestellt worden ist.

Die Imprägnierung erfolgt mit flüssigen, dielektrischen Medien. Bei Temperaturwechselbelastung erfahren die Kondensatorbauelemente und das Imprägniermedium eine Volumenänderung. Um das Gehäuse vor unzulässiger Deformation durch die Volumenänderung über das imkompressible Imprägniermedium zu schützen, muß ein genau vorgegebenes Puffervolumen (Reserve-Gasvolumen) im Kondensatorgehäuse eingeplant werden. Die Berechnung des Puffervolumens muß auf die vorgesehenen Einbaulagen abgestimmt werden (bei der Einbaulage "über Kopf" wird die Konstruktion aufwendiger).

Das konstruktionsmäßig bedingte Puffervolumen ist an und für sich unerwünscht, da Durchschlagsspannungen in Gasen im allgemeinen niedriger als in Flüssigkeiten sind. Zur Vermeidung dieses Puffervolumens, insbesondere bei runden Kondensatorbauformen, wären an und für sich metallische und nichtmetallische Volumenausgleichselemente geeignet. Metallbälge sind aber wegen der hohen Kosten nicht einsetzbar und Kunststoff-Formteile scheiden wegen der Permeabilität aus. Lediglich bei rechteckigen Kondensatorgehäusen wird im allgemeinen kein Puffervolumen benötigt, da bei den obengenannten Volumenänderungen die Formänderung der Gehäuseseitenwände ausreichend ist, um unzulässige Deformationen zu verhindern, weshalb Rechteckgehäuse in der Regel vollständig gefüllt werden können. Hierbei ist jedoch beim Einbau der Kondensatoren darauf zu achten, da sich die Außenabmessungen infolge der Gehäuseänderungen vergrößern.

Wie bereits weiter oben erwähnt, ist die Belag/Gehäuse-Teilentladeintensität im Gas bei gegebener Feldstärke naturgemäß erheblich höher als in der Imprägnierflüssigkeit. Wird nun ein Kondensator, vorzugsweise in runder Bauart, z.B. in "liegender" Einbaulage ohne Volumenausgleichselement betrieben, bildet sich durch das im Gehäuse vorhandene Puffervolumen eine Gasblase längs der oberen Gehäusinnenwand aus. Daraus resultiert grundsätzlich eine höhere Belag/Gehäuse-Teilentladeintensität in der Gasblase. Dies muß berücksichtigt werden, da ein Kondensator nur mit einer Belag/Gehäuse-Spannung betrieben werden darf, bei der ein zulässiger Teilentladeintensitätsschwellwert nicht überschritten wird, damit das Isoliermaterial und/oder das Gehäuse nicht bis zum Totalausfall geschädigt werden können.

Aufgabe der Erfindung ist es daher, einen Kondensator der eingangs genannten Art anzugeben, der lageunabhängig eingebaut werden kann, der gegenüber den Kondensatoren mit Puffervolumen eine Steigerung der zulässigen Belag/Gehäuse-Betriebsspannung bei gleichzeitig erhöhter Volumenkapazität besitzt und der kostengünstig herzustellen ist.

Diese Aufgabe wird erfindungsgemäß dadurch gelöst, daß das Kernrohr aus einem metallischen Werkstoff besteht, daß das Innere des Kernrohres gegen den restlichen Kondensator gas- und flülssigkeitsdicht abgedichtet ist, daß die Abdichtung aus zumindest einem beweglichen Kolben besteht und daß der Innenraum des Kernrohres mit einem Gas gefüllt ist, das als Puffervolumen des Kondensators dient.

Durch diese Ausgestaltung wird der Vorteil erzielt, daß einerseits der Kondensator zwar ein bei Volumenänderungen komprimierbares Puffervolumen besitzt, daß aber andererseits zwischen Kondensator und Gehäuse keine Gasblasen vorhanden sind, die eine Herabsetzung der Belag/Gehäuse-Betriebsspannung erforderlich machen würden. Es wird somit ein Leistungskondensator erhalten, der bei erhöhter Belag/Gehäuse-Betriebsspannung einen lageunabhängigen Einbau ermöglicht und gleichzeitig eine höhere Volumenkapazität besitzt, da die Bemessung des Abstandes zwischen Kondensatorwickel und Gehäuse sich nur nach der Durchschlagsspannung im Imprägniermedium zu richten braucht, die wie bereits erwähnt höher ist als die Durchschlagsspannung im Puffervolumen.

Zweckmäßige Ausgestaltungen des Kondensators sind in den Unteransprüchen angeführt.

Die Erfindung wird anhand der folgenden Ausführungsbeispiele näher erläutert.

In der dazugehörenden Zeichnung zeigen

FIG 1 Durchschlagsspannungen in verschiedenen Medien,

FIG 2 eine erste Ausführungsform und

FIG 3 eine weitere Ausführungsform eines Kondensators nach der Erfindung.

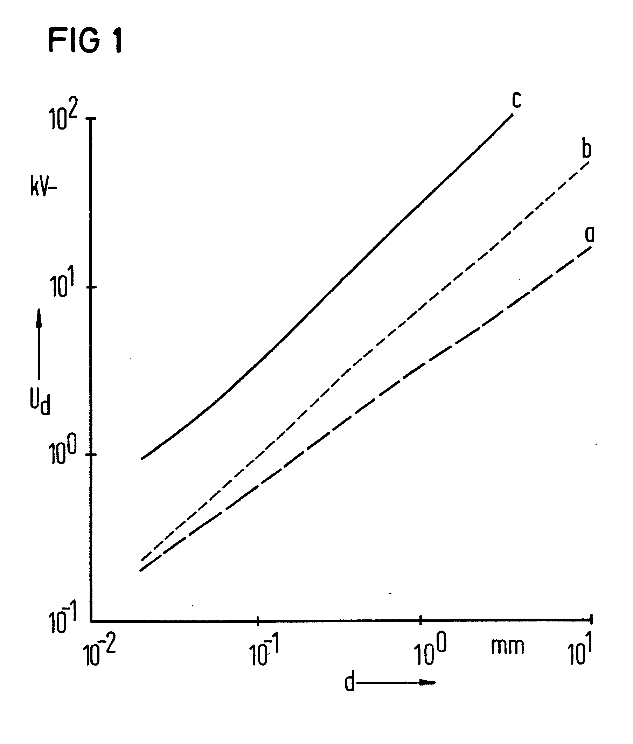

In der FIG 1 ist die Durchschlagspannung von Luft (a), SF₆ (b) und Mineralöl (c) in Abhängigkeit der Schichtdicke d (Abstand Belag/Gehäuse) bei einem Druck von p = 101,3 kPa dargestellt. Aus der FIG ist zu erkennen, daß die Durchschlagsspannung $U_d$ näherungsweise proportional zur Teilentladeeinsatzspannung ist. Weiterhin sind deutlich die Unterschiede der einzelnen Isoliermedien zu erkennen. Somit ist bei richtig dimensionierten Schichtdicken d ein ausreichender Feldschwächungseffekt reali sierbar. Insbesondere ist der FIG zu entnehmen, daß bei gleicher Schichtdicke d ein Kondensator, der ohne Puffervolumen realisiert ist, eine bedeutend höhere Durchschlagsspannung besitzt. Bei vorgegebener Durchschlagsspannung bedeutet dies, daß die Schichtdicke d bei Kondensatoren ohne Puffervolumen zwischen Belag und Gehäuse wesentlich geringer ausfallen kann, wodurch eine Erhöhung der Volumenkapazität erreicht wird.

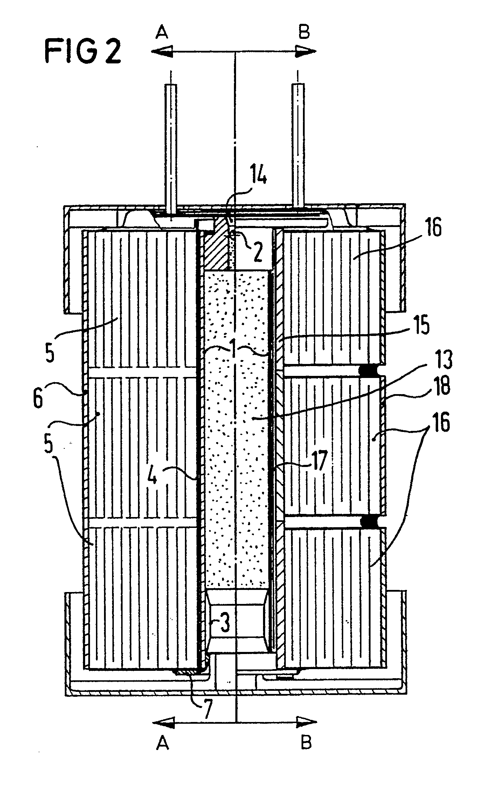

In der FIG 2 ist eine Ausführungsform eines Kondensators nach der Erfindung dargestellt. Ein Metallkernrohr 1 ist mit einem kompressiblen Gas 13, z.B. SF₆ gefüllt. Das Kernrohr 1 ist gegenüber dem restlichen Kondensator gas- und flüssigkeitsdicht verschlossen, indem auf der Oberseite ein Dichtelement 2, 14 und auf der Unterseite ein - ggf. zweifacher - Doppelkolben 3 angeordnet sind. Das Dichtelement 2, 14 besteht beispielsweise aus einem Ventil oder einer eingepreßten Stahlkugel.

Bei Volumenänderungen des in der FIG nicht dargestellten flüssigen Imprägniermittels wird über den beweglichen Kolben 3 das Gas 13 komprimiert, so daß der Innenraum des Kernrohrs 1 als Puffervolumen dient. Es kann somit - ganz gleich in welcher Lage der Kondensator eingebaut wird - keine die Durchschlagsspannung mindernde Gasblase zwischen Kondensatorbelag und Gehäuse auftreten. Dieser Effekt wird noch verstärkt, wenn als Imprägnierflüssigkeit eine gasaufnehmende Flüssigkeit verwendet wird, so daß auch die eventuell bei Teildurchschlägen zwischen Kondensatorbelägen entstehenden geringen Gasmengen von der Flüssigkeit aufgenommen werden und nicht im Laufe der Zeit Gasblasen bilden können.

Nach Imprägnierung wird der Kondensator gas- und flüssigkeitsdicht verschlossen. Besonders vorteilhaft ist es, den Endverschluß des Kondensators nach Abkühlung auf die untere Grenztemperatur durchzuführen, ggf. kann aber auch unter Druck gefüllt und gedichtet werden, wobei die vorgeschlagene Dichtung über eine Stahlkugel 2 besonders wirtschaftlich ist.

In der FIG 2 wird das metallische Kernrohr 1 zusätzlich als koaxialer Rückleiter verwendet, um eine niederinduktive Bauweise zu erhalten. Im Teilbild A wird das Kernrohr 1 zusätzlich als Kernstütze für die Kondensatorwickel 5 eingesetzt.

Im Teilbild B kommen Kernstützen 15 üblicher Bauart für die Kondensatorwickel 16 zum Einsatz.

In beiden Fällen muß eine Isolation 4, 17 gegen die Wickel 5, 16 vorgesehen werden, wobei im Teilbild A die Isolation aus einer überstehenden temperaturbeständigen Folie 4 besteht, die nach der Kontaktierung gereinigt wird.

Die äußere Hüllwand 6, 18 der Kondensatorwickel 5, 16 besteht vorzugsweise aus siegelfähiger Kunststoffolie, die die Schoopkanten der Kondensatorwickel abdeckt und nach dem Kontaktiervorgang aufgebracht wird.

Der Kontakt Wickel 5/Kernrohr 1 wird durch Löten des Flansches 7 an die Schoopschicht und an das Kernrohr 1 erreicht.

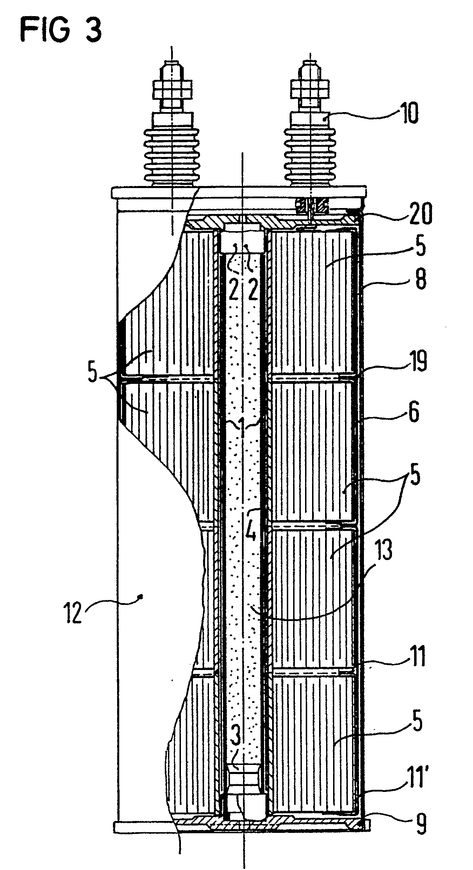

In der FIG 3 ist ein Großkondensator dargestellt, der aus vier parallel geschalteten Kondensatorwickeln 5 besteht. Das mit SF₆ - Gas 13 gefüllte Metallkernrohr 1 dient als Ausgleichselement (Puffervolumen) für die Volumenänderung des Einbaumaterials und/oder des Imprägniermediums. Im Metallkernrohr 1 ist ein (ggf. zweifacher) Doppelkolben 3 angeordnet. Als zweites Verschlußelement dient ein dichtgelötetes Ventil oder alternativ ein Dichtelement 2 gemäß FIG 2. Das Kernrohr 1 wird mit der mehrlagigen Isolation 4 gegen die Wickel 5 isoliert. Die Verschaltung der Einzelwickel 5 zur Kondensatorkapazität wird über eine dünne, mehrlagig isolierte Bandleitung 19 erreicht, die an der äußeren Isolierwand der Wickel 5 bzw. des Wickelstapels entlang geführt ist. Die Hüllwand 6 deckt die Schoopkante der Kondensatorwickel 5 ab und wird nach dem Schoopvorgang aufgebracht.

Eine in sicherer Weise dimensionierte Gehäuseisolation 8 wird durch eine mehrlagige Isolierung erzeugt.

Der Wickelstapel wird durch Abschlußscheiben 9, 20 über das formstabile, metallische Kernrohr 1 radial zentriert. Die zusätzliche Zentrierfunktion des Kernrohrs 1 stellt einen optimalen Abstand d zwischen Wickelhüllwand 6 und Innenwand des Gehäuses 12 her. Dadurch ergibt sich ein minimaler, gleichmässiger Abstand zwischen Wickelhüllwand 6 und Innenwand des Gehäuses 12, was mit größeren aktiven Wickeldurchmessern bzw. optimaler Ausnutzung der vorhandenen Geometrie verbunden ist.

Die Verschaltung von Wickeln 5 über äußere Bandleitungen 19 wird bei Niederspannungsleistungskondensatoren eingesetzt. Das vorliegende Ausführungsbeispiel unterscheidet sich aber hiervon dadurch, daß bei Parallelverschaltung von Wickeln 5 durch die äußere Bandleitung 19 nicht versucht wird, das Kernrohr 1 im Durchmesser zu minimieren, um die Volumenkapazität zu verbessern, sondern ein vom Kabelbaum oder von anderen Verschaltungselementen freies Kernrohr 1 zu erhalten. So kann ein im Durchmesser optimierter Konstruktionsraum geschaffen werden, der einerseits minimal kapazitives Volumen verbracht, andererseits aber ausreichend dimensioniert ist, um das Volumenausgleichselement nach der Erfindung einzusetzten.

Sollte trotz der weiter oben beschriebenen Schwierigkeiten ein elastisches Volumenausgleichselement im Kernrohrbereich eingebaut werden, kann ebenfalls durch ein Ventil nach dem Imprägniervorgang über die Gehäuseaußenwand ein vorbestimmter Arbeitsdruck eingestellt werden, auch wenn beispielsweise das Imprägniermittel mit Überdruck eingefüllt wird.

Beim Ausführungsbeispiel nach der FIG 3 ist die Wickelstapelhöhe gegenüber herkömmlichen Kondensatoren mit Formteilen bzw. Kappen reduziert. Die Abschlußscheiben 9, 20 bilden die Gegenlagerung der Sicherung (Abreißdraht). Die Abschaltung wird über eine Faltsicke oder einen Schnappdeckel erreicht. Alternativ besteht die Möglichkeit, das Metallrohr 1 über ein isoliertes Kupplungselement an einen Membranboden des Kondensatorgehäuses zu koppeln. Im Deckelbereich kann das Metallrohr 1 über eine z.B. gefederte Scheibe 20 gegen das Wickelpaket die Sicherung abreißen.

Alternativ besteht eine weitere Möglichkeit, über eine Metallfaltenbalg eine Sicherung im Keramikbereich der äußeren Anschlußelemente 10 abzureißen.

Insgesamt wird die Bauhöhe des Kondensators nach der Erfindung im Vergleich zu einem nach dem Stand der Technik aufgebauten Kondensator um ca. 5 bis 15 % reduziert. Dadurch wird eine erhebliche Steigerung der Volumenkapazität erreicht und gleichzeitig eine verbesserte Belag/Gehäuse-Isolation trotz lageunabhängigen Einbaus realisiert.

## Ansprüche

1. Elektrischer Kondensator, der mit einer dielektrischen Flüssigkeit imprägniert ist, der aus zumindest einem auf einem Kernrohr angeordneten Kondensatorwickel besteht, und der gas-und flüssigkeitsdicht in einem Gehäuse eingebaut ist, das mit der dielektrischen Flüssigkeit bis auf ein Puffervolumen gefüllt ist, **dadurch gekennzeichnet, daß** das Kernrohr (1) aus einem metallischen Werkstoff besteht, daß das Innere des Kernrohrs (1) gegen den restlichen Kondensator gas- und flüssigkeitsdicht abgedichtet ist, daß die Abdichtung aus zumindest einen beweglichen Kolben (3) besteht und daß der Innenraum des Kernrohrs (1) mit einem Gas (13) gefüllt ist, das als Puffervolumen des Kondensators dient.

2. Elektrischer Kondensator nach Anspruch 1, **dadurch gekennzeichnet, daß** der zweite Abschluß des Kernrohrs (1) aus einer feststehenden Abdichtung (2, 14) besteht.

3. Elektrischer Kondensator nach Anspruch 2, **dadurch gekennzeichnet, daß** die feststehende Abdichtung aus einem Ventil (14) besteht.

4. Elektrischer Kondensator nach Anspruch 2, **dadurch gekennzeichnet, daß** die feststehende Abdichtung aus einer in das Kernrohr (1) eingepreßten Stahlkugel (2) besteht.

5. Elektrischer Kondensator nach zumindest einem der Ansprüche 1 bis 4, **dadurch gekennzeichnet, daß** der Kolben (3) als Doppelkolben ausgebildet ist.

6. Elektrischer Kondensator nach Anspruch 5, **dadurch gekennzeichnet, daß** der Kolben (3) als zweifacher Doppelkolben ausgebildet ist.

7. Elektrischer Kondensator nach zumindest einem der Ansprüche 1 bis 6, **dadurch gekennzeichnet, daß** das Kernrohr (1) als koaxialer Rückleiter eingesetzt ist.

8. Elektrischer Kondensator nach zumindest einem der Ansprüche 1 bis 7, **dadurch gekennzeichnet, daß** das Kernrohr (1) als Kernstütze für den Wickel (5) eingesetzt ist.

9. Elektrischer Kondensator nach zumindest einem der Ansprüche 1 bis 8, **dadurch gekennzeichnet, daß** der Kondensator aus mehreren miteinander verschalteten Kondensatorwickeln (5, 16) besteht.

10. Elektrischer Kondensator nach Anspruch 9, **dadurch gekennzeichnet, daß** die Kondensatorwickel (5) über einen dünnen mehrlagig isolierten Bandleiter (19) miteinander verschaltet sind und daß der Bandleiter (19) auf der Außenseite der Wickel (5) verlegt ist.

11. Elektrischer Kondensator nach zumindest einem der Ansprüche 1 bis 10, **dadurch gekennzeichnet, daß** er mit einer gasaufnehmenden Flüssigkeit imprägniert ist.

# FIG 1

FIG 2

## FIG 3

<table>
<tr><td><strong>Europäisches Patentamt</strong></td><td><strong>EUROPÄISCHER RECHERCHENBERICHT</strong></td><td>Nummer der Anmeldung<br>EP 89 11 6663</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 589 618 (LA TELEMECANIQUE ELECTRIQUE)<br>* Seite 6, Zeilen 8 - 24 @ Seite 7, Zeilen 11 - 24; Figur 1 *<br>--- | 1 | H 01 G 1/11 |
| A | DE-B-1 148 331 (SIEMENS & HALSKE)<br>* Das ganze Dokument *<br>--- | 1 | |
| A | EP-A-0 190 621 (SIEMENS)<br>* Spalte 1, Zeilen 13 - 36; Figur 2 *<br>--- | 1, 9, 11 | |
| A | US-A-2 443 605 (DE LANGE)<br>* Spalte 3, Zeilen 27 - 36; Figur 2 *<br>--- | 1, 7, 8 | |
| A | DE-C- 754 976 (STEHELIN)<br>--- | | |
| X | DE-C- 655 157 (RICHARD-JAHRE SPEZIALFABRIK FÜR KONDENSATOREN)<br>* Insgesamt *<br>----- | 1,5,8 | |
| | | | **RECHERCHIERTE SACHGEBIETE (Int. Cl.5)**<br><br>H 01 G |

Der vorliegende Recherchenbericht wurde für alle Patentansprüche erstellt

| Recherchenort | Abschlußdatum der Recherche | Prüfer |
|---|---|---|
| DEN HAAG | 25-04-1990 | MES L.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes Dokument

EPO FORM 1503 03.82 (P0403)